Europäisches Patentamt

European Patent Office

Office européen des brevets

(11) Numéro de publication : **0 388 335 B1**

# FASCICULE DE BREVET EUROPEEN

(12)

(45) Date de publication du fascicule du brevet :
**16.12.92 Bulletin 92/51**

(21) Numéro de dépôt : **90420138.1**

(22) Date de dépôt : **13.03.90**

(51) Int. Cl.⁵ : **B29C 45/17**

---

(54) **Dispositif de bridage pour la fixation interchangeable des moules de conformation sur les presses de moulage.**

---

(30) Priorité : **14.03.89 FR 8903572**

(43) Date de publication de la demande :
**19.09.90 Bulletin 90/38**

(45) Mention de la délivrance du brevet :
**16.12.92 Bulletin 92/51**

(84) Etats contractants désignés :
**AT CH DE ES FR GB IT LI NL SE**

(56) Documents cités :
**DE-A- 2 947 938
FR-A- 1 555 664
FR-A- 2 294 019
US-A- 3 177 698**

(73) Titulaire : **S.A. DES ETABLISSEMENTS
STAUBLI (France)
B.P. 20 183 Rue des Usines
F-74210 Faverges (FR)**

(72) Inventeur : **Truchet, Gaston
Route d'Annecy
F-74210 Faverges (FR)**
Inventeur : **Schwab, Arthur
Benk 19
W-8589 Bindlach (DE)**

(74) Mandataire : **Monnier, Guy et al
Cabinet Monnier 150 Cours Lafayette B.P.
3058
F-69393 Lyon Cédex 03 (FR)**

## Description

La présente invention a trait aux dispositifs de bridage utilisés pour assurer la fixation interchangeable des deux éléments ouvrants des moules de conformation contre les plateaux fixe et mobile des presses classiques de moulage.

On sait que pour permettre l'assujettissement très rapide, même parfois automatique, des éléments de moule sur les presses , on a recours à des dispositifs de bridage à commande mécanique, électrique, pneumatique ou hydraulique qui comprennent généralement un organe mobile monté sur le plateau considéré de la presse pour venir coopérer avec une platine débordante préalablement fixée à la partie arrière de l'élément du moule. Ces dispositifs de bridage doivent être prévus en nombre suffisant sur chacun des deux plateaux de la presse pour agir périphériquement sur le bord de chaque platine envisagée, et l'on comprend que ces dispositifs occupent une surface non négligeable du plateau, en réduisant de ce fait l'espace disponible pour le moule lui-même.

Pour remédier à cet inconvénient, on a proposé des dispositifs de bridage comprenant en combinaison :

- un nez prévu axialement en saillie au centre de la paroi arrière de l'élément de moule, lequel nez comporte un fût cylindrique et une face débordante d'extrémité à profil irrégulier ;
- un barillet monté à rotation sur le plateau correspondant de la presse, lequel barillet est découpé d'une ouverture présentant le même profil irrégulier que la face d'extrémité du nez sus-mentionné ;
- et des moyens d'entraînement associés au barillet en vue de faire tourner celui-ci autour, du fût du nez après engagement de ce nez dans l'ouverture dudit barillet.

On conçoit qu'un tel dispositif occupe uniquement la partie centrale du moule et des plateaux de la presse, en laissant totalement libre la périphérie, de telle forte qu'on peut finalement monter sur la presse des moules de plus grandes dimensions.

Il convient toutefois d'observer que pour assurer le rapprochement à force de l'élément de moule et du plateau de la presse lors de la rotation du barillet, il y a lieu de conférer à la paroi de la face débordante d'extrémité du fût cylindrique de l'élément précité et à la paroi conjuguée dudit barillet une légère obliquité propre à assurer le déplacement axial du nez central. Cette double obliquité complique la construction et, si l'on entend éviter tout risque de desserrage intempestif des pièces, limite en outre l'étendue du rapprochement axial de celles-ci.

C'est à ces inconvénients qu'entend remédier la présente invention, laquelle a pour objet le dispositif de bridage défini à la revendication 1.

L'invention consiste en fait à assurer le montage du barillet sur le plateau de la presse par vissage, de façon à ce que le déplacement angulaire de ce barillet provoque simultanément son déplacement axial, en opérant ainsi le rapprochement à force désiré.

Le dessin annexé, donné à titre d'exemple, permettra de mieux comprendre l'invention, les caractéristiques qu'elle présente et les avantages qu'elle est susceptible de procurer :

Fig. 1 est une vue en perspective montrant en vis-à-vis la paroi arrière d'un élément de moule et la paroi intérieure d'un plateau de presse, ce dernier étant équipé d'un dispositif de bridage suivant la présente invention.

Fig. 2 montre en coupe verticale, à échelle agrandie, les deux parois précitées préalablement à leur engagement.

Fig. 3 reproduit fig. 2 après assemblage.

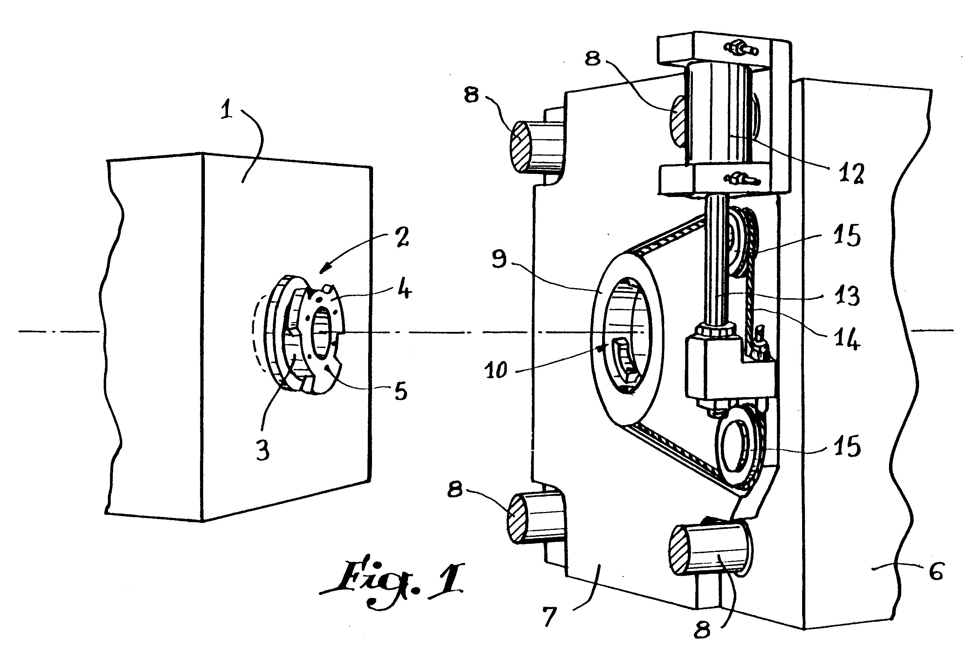

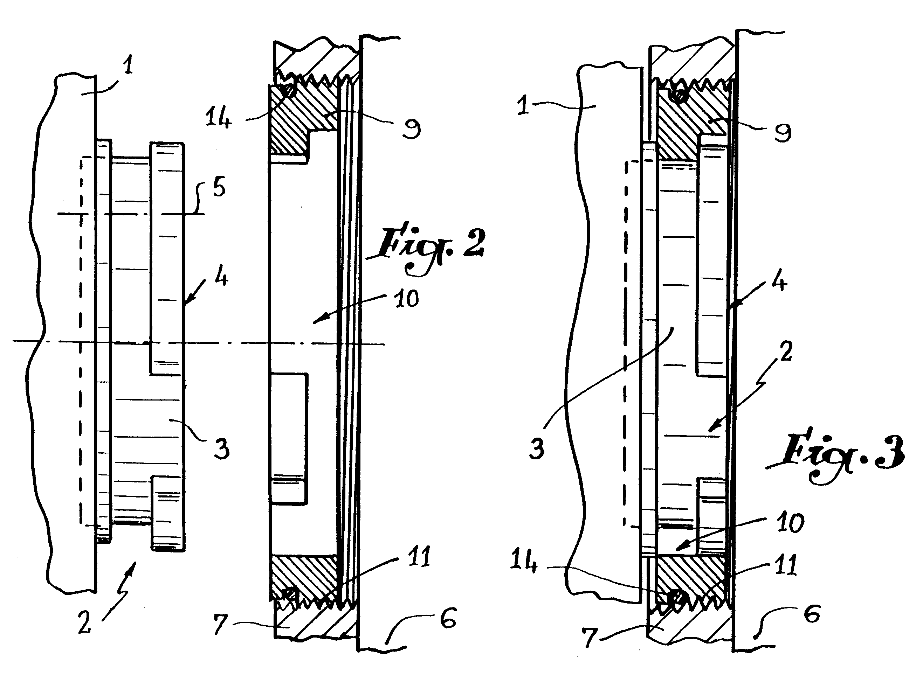

En fig. 1 et 2, la référence 1 désigne la partie arrière de l'un des deux éléments ouvrants d'un moule de conformation. Sur la paroi arrière de cet élément 1 est prévu un nez 2 qui s'étend en saillie suivant l'axe de ladite paroi. Comme montré en fig. 2, ce nez 2 comprend un fût 3 à section circulaire, qui se termine par une face débordante d'extrémité 4 établie à un profil irrégulier ; dans l'exemple de réalisation envisagé, ce profil comporte trois lobes débordants régulièrement répartis. La fixation du nez 2 contre la paroi arrière de l'élément 1 est susceptible d'être opérée de toute manière appropriée, par exemple à l'aide de vis longitudinales schématisées en 5.

La référence 6 désigne le plateau de la presse sur lequel l'élément de moule 1 est destiné à venir se fixer. Contre la face de ce plateau 6 est rapportée une plaque 7 qui est échancrée pour laisser place aux colonnes 8 qui assurent le guidage du plateau opposé (non représenté) de la presse. La plaque 7 est dotée en son centre d'un barillet 9 découpé d'une ouverture axiale 10 présentant un profil identique à celui de la face d'extrémité 4 du nez 2, de façon à ce que ladite face soit susceptible d'être engagée à l'intérieur de cette ouverture 10 moyennant une orientation déterminée.

Comme bien montré en fig. 2, le bord extérieur cylindrique du barillet 9 est fileté en 11 de manière à se visser dans un taraudage correspondant ménagé dans l'ouverture de la plaque 7 qui forme logement pour ledit barillet. La rotation de celui-ci est assurée par un vérin 12 sur la tige 13 duquel est fixé un câble 14, lequel est renvoyé par deux poulies 15 pour venir s'enrouler et/ou se fixer sur la périphérie du barillet 9, en avant du filetage 11 de celui-ci.

Le fonctionnement et le mode d'utilisation du dispositif de bridage qui vient d'être décrit résultent des explications qui précèdent et se comprennent aisément.

On conçoit en effet que pour fixer l'élément de moule 1 contre le plateau 6 de la presse, il suffit d'engager le nez 2 à l'intérieur de l'ouverture 10 du barillet 9 et de faire pivoter celui-ci de 90° à l'aide du vérin 12-13 pour que la face 4 se trouve retenue dans l'ouverture 10. Par suite du profil irrégulier de la face d'extrémité 4 et de l'ouverture 10, ce pivotement du barillet 9 assure bien le maintien efficace du nez 2 et l'assemblage de l'élément 2 et du plateau 6, ledit élément ne pouvant être libéré que moyennant retour à la position précédente par rotation du barillet en sens inverse.

On comprend que le déplacement angulaire du barillet 9 opère, non seulement le verrouillage du nez 2, mais également le rapprochement axial des éléments de moule 1 et 6 sans qu'il soit nécessaire de prévoir une pente quelconque sur la face d'extrémité 4 et sur la paroi arrière de l'ouverture 10.

Il convient d'observer que les moyens destinés à l'entraînement angulaire du barillet 9 peuvent revêtir toute autre forme de mise en oeuvre. (vis sans fin, crémaillère, etc...).

## Revendications

1. Dispositif de bridage pour la fixation démontable des éléments ouvrants des moules de conformation sur les plateaux d'une presse de moulage, du genre comprenant en combinaison un nez (2) qui est prévu axialement en saillie au centre de la paroi arrière de l'élément de moule (1) considéré et qui comporte un fût cylindrique (2) et une face débordante d'extrémité (4) présentant un profil irrégulier, un barillet (9) qui est monté à rotation sur le plateau correspondant (6) de la presse et qui est découpé axialement d'une ouverture (10) présentant le même profil irrégulier que la face d'extrémité (4) précitée, et des moyens d'entraînement associés au barillet (9) en vue de faire tourner celui-ci autour du fût (3) du nez (2) après engagement de ce dernier dans l'ouverture (10), caractérisé en ce que le barillet (9) est monté sur le plateau (6) par vissage périphérique de façon à ce que sa rotation provoque le serrage de l'élément de moule (1) contre ledit plateau (6).

2. Dispositif suivant la revendication 1, caractérisé en ce que le barillet (9) est monté sur une plaque (7) rapportée contre la paroi du plateau (6) qui est tournée vers le plateau opposé.

3. Dispositif suivant l'une quelconque des revendications 1 et 2, caractérisé en ce que les moyens d'entraînement associés au barillet (9) comprennent une tige (13) qui est mue par un vérin (12) et qui est reliée audit barillet (9) par un câble (14) renvoyé pour venir s'enrouler ou se fixer sur la périphérie de ce barillet (9).

## Claims

1. A clamping device for the detachable fixing of the opening elements of shaping moulds on the platens of a moulding press, of the type comprising in combination a nose (2) which is provided axially projecting in the centre of the rear wall of the mould element (1) in question and which comprises a cylindrical shank (3) and a projecting end face (4) having an irregular profile, a cylinder (9) which is mounted so as to rotate on the corresponding platen (6) of the press and which is cut into axially by an opening (10) having the same irregular profile as the afore-mentioned end face (4), and drive means associated with the cylinder (9) for rotating the latter about the shank (3) of the nose (2) after the latter has engaged in the opening (10), characterised in that the cylinder (9) is mounted on the platen (6) by peripheral screwing such that the rotation thereof causes the mould element (1) to be clamped against said platen (6).

2. A device according to Claim 1, characterised in that the cylinder (9) is mounted on a plate (7) attached against the wall of the platen (6) which faces the opposing platen.

3. A device according to any one of Claims 1 and 2, characterised in that the drive means associated with the cylinder (9) comprise a rod (13) which is moved by a piston-cylinder unit (12) and which is connected to said cylinder (9) by a cable (14) which is deflected to wrap about or to be fixed on the periphery of said cylinder (9).

## Patentansprüche

1. Spannvorrichtung für die Befestigung der zu öffnenden Elemente von Formwerkzeugen auf der Grundplatte einer Formpresse der Art, die zusammengestellt enthält eine Nase (2) die axial vorsteht aus der Rückseite des betreffenden Formelements (1) und die einen zylindrischen Schaft (3) enthält und eine überstehende Stirnseite (4) die ein unregelmäßiges Profil aufweist, einen Ring (9) der drehbar auf der entsprechenden Grundplatte (6) der Presse montiert ist und mit dem gleichen unregelmäßigen Profil versehen ist wie vorgenannte Stirnseite (4), und Antriebsmittel verbunden mit Ring (9) um diesen um Schaft (3) der Nase (2) herum zu drehen nach Einführung letzterer in Öffnung (10), dadurch **gekennzeichnet,** daß Ring (9) auf Grundplatte (6) montiert ist mittels einer peripheren Schraubverbindung, so daß seine Drehung das spannen des Formelements (1) gegen genannte Grundplatte (6) bewirkt.

2. Vorrichtung nach Anspruch 1 ,dadurch gekennzeichnet, daß Ring (9) auf der Platte (7) motiert ist, die auf der Wandung der Grundplatte (6) befestigt ist, welche der gegenüberliegenden Grundplatte zugekehrt ist.

3. Vorrichtung nach Ansprüchen 1 und 2 ,dadurch gekennzeichnet, daß die mit Ring (9) verbundenen Antriebsmittel eine Kolbenstange (13) enthalten, die von einem Zylinder (12) bewegt wird und die mit genanntem Ring (9) durch ein Kabel (14) verbunden ist , wobei dieses Kabel den Umfang von Ring (9) umschlingt oder dort befestigt ist.

_Fig. 1_

EP 0 388 335 B1

*Fig. 2*

*Fig. 3*

EP 0 388 335 B1